# EUROPEAN PATENT SPECIFICATION

(11) **EP 4 070 125 B1**
(45) Date of publication and mention of the grant of the patent: **29.07.2026**
(21) Application number: 20821440.3
(22) Date of filing: 02.12.2020
(51) Int. Cl.: G01S 7/481, G01S 7/4863, G01S 17/894

(54) **TIME OF FLIGHT SENSING METHOD**
FLUGZEITMESSVERFAHREN
PROCÉDÉ DE DÉTECTION DE TEMPS DE VOL

(30) Priority: 05.12.2019 US 201962944009 P
(43) Date of publication of application: 12.10.2022
(73) Proprietor: ams-OSRAM International GmbH, 93055 Regensberg (DE)
(72) Inventor: STOPPA, David, 5656 AE Eindhoven (NL); VAELLO PAÑOS, Miguel Bruno, 5656 AE Eindhoven (NL)
(74) Representative: Tergau & Walkenhorst Intellectual Property GmbH
(86) International application number: PCT/SG2020/050710
(87) International publication number: WO 2021/112763

(56) References cited:
- WO-A1-2019/064062
- DE-A1- 102017 223 102
- US-A1- 2014 253 688
- US-A1- 2015 312 537

## Description

### Technical Field of the Disclosure

The disclosure relates to a method of time of flight sensing, and to a time of flight sensor system.

### Background of the Disclosure

The present disclosure relates to a method of time of flight sensing. Time of flight sensing determines the distance of an object from a sensor using the known speed of light. In one example a pulse of light (e.g. at an infra-red wavelength) is emitted from a light source, and light reflected back towards the sensor from an object is detected. The source and the sensor may be located adjacent to one another (e.g. as part of the same integrated system). The distance between the sensor and the object is determined based upon the elapsed time between emission of the pulse of light and detection of the pulse of light by the sensor.

The time of flight sensor may be an imaging array which comprises an array of pixels. The pixels may for example be single photon avalanche photodiodes (or some other form of photo-detector). The imaging array may provide a 'depth map' which indicates the measured distance of objects from the sensor in the form of an image.

The intensity of light which is received by a time of flight sensor following reflection from an object reduces as a function of the square of the distance between the object and the sensor. As a result, the signal to noise ratio at the sensor when light is reflected from a distant object (e.g. at a distance of 5 metres or more) may be low. In one known time of flight sensing method, in order to improve the signal to noise ratio for distant objects, the signals output from multiple pixels of the sensor are combined together. The multiple pixels may be arranged as a square or rectangle, and may be referred to as a macropixel. Because the macropixel has a larger surface area than a single pixel it receives more photons of light, and thereby provides an output which has a better signal to noise ratio. However, grouping pixels together in this way is disadvantageous because it reduces the resolution of the depth map which is obtained.

In one known method this problem is addressed by obtaining one depth map from the time of flight sensor at a low resolution (using macropixels) and in addition obtaining a further depth map from the time of flight sensor at a high resolution (using individual pixels). These two depth maps are then added together by a processor. The resulting combined depth map consists of high resolution areas where close objects are present and low resolution areas where distant objects are present.

A disadvantage associated with the above approach is that in order to obtain the two depth maps the light source must be operated two times. This uses a significant amount of power. This is particularly disadvantageous if the sensor forms part of a hand held device, e.g. a mobile phone, because battery life of the device is of key importance to the user and operation of the light source will deplete the battery.

US 2014/253688 A1 discloses a method for processing images from a time of flight sensor generating high-resolution depth maps and lower-resolution depth maps depending on the binning factor used. A combination of multiple binned pixels of varying binning factors and non-binned pixels can be simultaneously used controlled by a centralized unit.

It is therefore an aim of the present disclosure to provide a time of flight sensing method that addresses one or more of the problems above or at least provides a useful alternative.

### Summary

In general, this disclosure proposes to overcome the above problems by operating groups of photo-detectors in a first mode in which the outputs from the photo-detectors are combined together, whilst at the same time operating other groups of photo-detectors in a second mode in which the outputs from the photo-detectors are not combined together. The first mode may be used for distant objects and the second mode may be used for close objects. This arrangement advantageously provides low resolution depth mapping for distant objects (whilst providing an acceptable signal to noise ratio), and at the same time provides high resolution depth mapping for close objects. This is advantageous because it avoids the prior art requirement to obtain a full low resolution depth map and subsequently obtain a full high resolution depth map. Obtaining two full depth maps according to the prior art requires the emission of more light pulses from a light source, and thus causes faster battery depletion.

According to one aspect of the present disclosure, there is provided a method of time of flight sensing, the method comprising using an emitter to emit pulses of radiation, using an array of photo-detectors to detect radiation reflected from an object, for a given group of photo-detectors of the array, determining based upon measured times of flight of the radiation, whether to use a first mode of operation in which outputs from individual photo-detectors of the group are combined together or to use a second mode of operation in which outputs from individual photo-detectors are processed separately, wherein the array of photo-detectors,wherein the photo-detectors are single photon avalanche photodiodes, comprises a plurality of groups of photo-detectors, wherein one or more groups of photo-detectors operate in the first mode whilst in parallel one or more groups of photo-detectors operate in the second mode, and the switching between modes of operation for a given group of photodetectors is controlled by an independently operating electrical logic circuit which is associated with that group of photodetectors based upon measures times of flight of the radiation.

Thus, embodiments of this disclosure advantageously allow distance data for different resolutions to be obtained in parallel from different parts of the same photo-detector array.

When the method beings, groups of photo-detectors may initially operate in the first mode of operation.

When the method begins all groups of photo-detectors may initially operate in the first mode of operation.

The method may switch from the first mode of operation to the second mode of operation for a group of photo-detectors if measured times of flight for that group of photo-detectors indicate the presence of an object at distance which is below a threshold distance.

The method may delay switching to the second mode of operation until sufficient measured times of flight have been received at the group of pixels in the first mode to provide a desired signal to noise ratio.

The method may switch immediately to the second mode of operation.

If measured times of flight for the individual photo-detectors do not indicate the presence of an object at the distance identified during the first mode of operation, the method may switch back to the first mode of operation.

The method may further comprise, for the given group of photo-detectors of the array, determining based upon measured times of flight of the radiation, whether to use a third mode of operation in which outputs from sub-groups of photo-detectors are combined together, the method switching from the first mode of operation to the third mode of operation for a group of photo-detectors if measured times of flight for that group of photo-detectors indicate the presence of an object at distance which is below a first threshold distance but above a second threshold distance, wherein one or more groups of photo-detectors operate in the first mode whilst in parallel one or more groups of photo-detectors operate in the third mode.

The method may further comprise one or more groups of photo-detectors operating in the second mode.

Switching between modes of operation for a given group of photodetectors is controlled by a logic circuit which is associated with that group of photodetectors.

The logic circuit may form part of an electrical circuit which is associated with the group of photodetectors and which forms part of the same integrated circuit as the photodetectors.

The method may re-commence each time a pulse of light is emitted.

The photo-detectors are single photon avalanche photodiodes.

According to a second aspect of the invention, there is provided a time of flight sensor system comprising an emitter configured to emit pulses of radiation, and a sensor module comprising a sensor and sensor electronics, wherein the sensor comprises an array of photo-detectors, the photo-detectors being arranged in groups, and wherein the sensor electronics comprises a plurality of independently operating electric circuits, an electric circuit being associated with each group of sensors, and wherein each electric circuit includes a logic circuit configured to determine based upon measured times of flight of the radiation, whether to use a first mode of operation in which outputs from individual photo-detectors of the group are combined together or to use a second mode of operation in which outputs from individual photo-detectors are not combined together.

The logic circuit may be configured to the electric circuit from the first mode of operation to the second mode of operation for a group of photo-detectors if measured times of flight for that group of photo-detectors indicate the presence of an object at distance which is below a threshold distance.

The logic circuit may be configured to determine based upon measured times of flight of the radiation, whether to use a third mode of operation in which outputs from sub-groups of photo-detectors are combined together, switching from the first mode of operation to the third mode of operation for a group of photo-detectors occurring if measured times of flight for that group of photo-detectors indicate the presence of an object at distance which is below a first threshold distance but above a second threshold distance.

The electrical circuit which is associated with the group of photodetectors may form part of the same integrated circuit as the photodetectors.

The electrical circuit which is associated with the group of photodetectors may further comprise a front end, a time to digital value convertor, and a memory.

The memory may be a histogram memory.

The photo-detectors are single photon avalanche photodiodes.

Finally, the present time of flight sensing method disclosed here utilises a novel approach at least in that higher resolution and lower resolution data are captured in parallel using a single sensor.

### Brief Description of the Preferred Embodiments

Some embodiments of the disclosure will now be described by way of example only and with reference to the accompanying drawings, in which:
Figure 1 schematically depicts a time of flight sensor system which may operate using a method according to an embodiment of the invention;
Figure 2 schematically depicts a method of time of flight sensing according to an embodiment of the invention;
Figure 3 schematically depicts a method of time of flight sensing according to another embodiment of the invention; and
Figure 4 is a flow chart which depicts a method of operating a time of flight sensor according to an embodiment of the invention.

### Detailed Description of the Preferred Embodiments

Generally speaking, the disclosure provides a method of time of flight sensing in which higher resolution data and lower resolution data are captured in parallel.

Some examples of the solution are given in the accompanying figures.

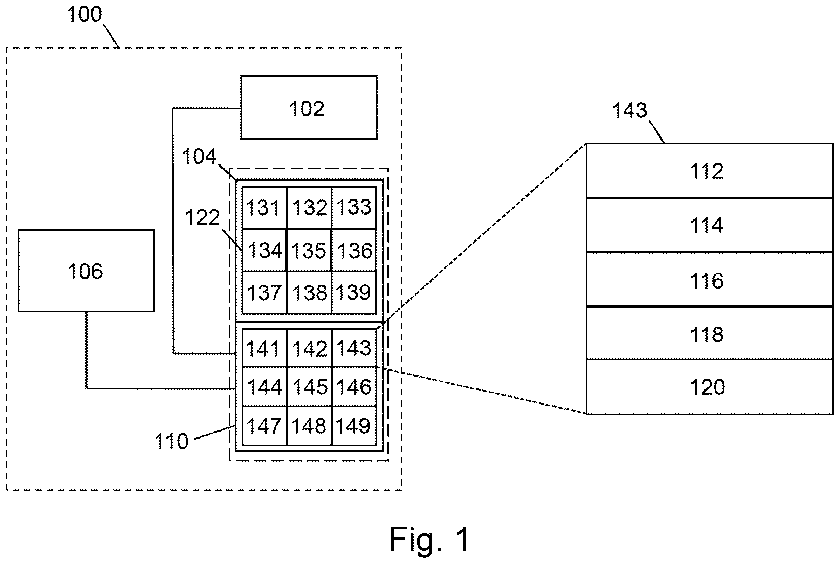

Figure 1 schematically depicts a time of flight sensor system 100 which may be operated in accordance with an embodiment of the invention. The time of flight sensor system 100 comprises a light source 102, a sensor module 104 and an image processor 106. The sensor module comprises a sensor 122 and sensor electronics 110. The light source 102 is configured to emit pulses of light (e.g. infra-red radiation).

The sensor 122 is an array of photo-detectors (single photon avalanche diodes).

These may be referred to as pixels. The pixels may be arranged in groups. In Figure 1 nine groups of pixels 131-139 are schematically depicted (other numbers of groups of pixels may be provided). Each group of pixels may be provided with its own associated electronics.

The sensor electronics 110 is provided as a plurality of independently operating electrical circuits. An electrical circuit may be associated with each group of pixels. In Figure 1 there are nine electrical circuits 141-149 (one for each group of pixels 131-39). Other numbers of electrical circuits may be provided. Each electrical circuit 141-149 of the sensor electronics 110 may be provided directly beneath an associated pixel 131-139. However, for ease of illustration in the Figure 1 the sensor electronics 110 are depicted separately from the sensor 122. The sensor 122 and sensor electronics 110 may be provided as a single integrated circuit.

One of the electrical circuits 143 is depicted in more detail on the right hand side of figure 1. The electrical circuit 143 is associated with one group of pixels 133. The group of pixels 133 may be referred to as a macropixel. The electrical circuit 143 comprises a so called "front end" 112, which receives an analogue voltage from each pixel of the macropixel and provides an output signal. The pixels are single photon avalanche photodiodes. When a photon is incident upon a photodiode, an avalanche effect takes place in the photodiode, and an analogue voltage pulse is output from the photodiode. The analogue voltage pulse may have a generally triangular shape. The analogue voltage pulse is received by the front end 112, and the front end outputs a digital pulse, i.e. a pulse which has a generally rectangular shape.

The electrical circuit 143 further comprises a time to digital value convertor 114. As is depicted in figure 1, an output from the light source 102 is connected to the sensor electronics 110. When a pulse of light is emitted, this output initiates operation of a timer of the time to digital value converter 114. When a reflected photon is received by a pixel, and the front end 112 outputs a signal, this causes an elapsed time value to be read from the time to digital value convertor 114. This may be referred to as a time stamp.

The time value is stored in a memory 116. The memory 116 may be a histogram memory. A histogram memory comprises bins representative of different elapsed times. When the photon is detected, the elapsed time value for that photon causes an increment of the bin which corresponds with the time value. Over time, many photons are detected and many associated elapsed times are measured. The data in the histogram memory represents the number of detected photons as a function of elapsed time. Peaks in the data are indicative of objects which have reflected the photons. The times associated with the peaks are indicative of the distance to those objects. The distance resolution (which may be referred to as depth resolution) provided by the histogram memory will depend upon the time duration of each bin.

The electrical circuit 143 further comprises a logic circuit 118. The logic circuit determines whether outputs from the macropixel 133 should be used individually or should be combined together (as explained further below). Logic circuits associated with different macropixels operate independently of each other. The logic circuit may for example be a processor which performs the determination. The logic circuit may for example be a hardwired circuit which performs the determination.

The electrical circuit 143 further comprises a time to distance converter 120, which receives histogram memory outputs in the form of digital representations of time, and converts these times into distances. Outputs from the time to distance convertor 120 are passed to the image processor 106, which combines the outputs to form an image which depicts the distances to objects in the field of view of the time of flight sensor system 100. The image may be referred to as a depth map.

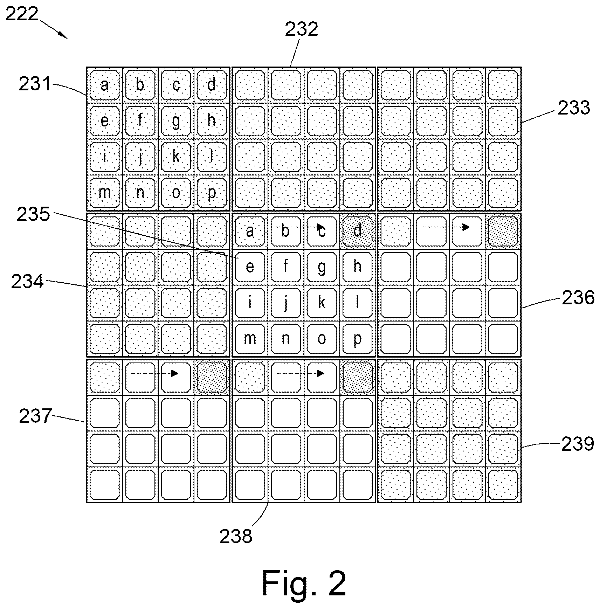

Figure 2 schematically depicts a method of time of flight sensing according to an embodiment of the invention. In the schematic depiction of Figure 2 the sensor 222 comprises an array of 12 x 12 single photon avalanche diodes (which may be referred to as pixels). As an example not forming part of the invention the sensor array may be implemented as a CCD array or as an array of PPD photodiodes. Where a CCD or PPD is used, a memory which is not a histogram memory may be used.

The pixels are grouped together, each group being referred to as a macropixel. There are nine macropixels 231-239. Each macropixel has sixteen pixels a-p (for simplicity of illustration not all of these are labelled). It will be appreciated that this is merely a schematic example, and that in practice the sensor array 222 may consist of more than nine macropixels. Similarly, macropixels may consist of more or less than sixteen pixels.

In a method according to an embodiment of the invention, five of the macropixels 231-234, 239 are operating in a first mode in which outputs of individual pixels a-p are combined together. This combining together of the outputs occurs before a time value is allocated to a detected photon. When the time value is allocated to the detected photon (which may be referred to as time-stamping), no information is recorded regarding which of the individual pixels a-p detected the photon. Thus, data stored in the histogram memory relates to the macropixel as a whole and not to an individual pixel.

Four of the macropixels 235-238 are operating in a second mode in which outputs of individual pixels a-p are processed separately and are not combined together. When a time value is allocated to a detected photon (i.e. time-stamping), the identity of the pixel which detected the photon is recorded along with the time value. Thus, data stored in the histogram memory relates to each individual pixel.

The first and second modes are operating in parallel.

The first and second modes are now described with reference to figures 1 and 2 in combination. In the first mode, when a front end 112 associated with a macropixel (e.g. macropixel 231) receives an output from any of the pixels a-p of that macropixel it causes a time value to be read out of the time to digital value convertor 114. The histogram memory 116 is incremented accordingly. No data is recorded regarding which of the pixels of the macropixel 231 detected the photon. Over time, data is recorded in the histogram memory which indicates photons received at any pixel a-p across the macropixel 231. This is relatively low resolution data but has a relatively high signal to noise ratio. Thousands of pulses may for example be emitted by the light source 102, and photons from at least some of the pulses are detected by the macropixel 231. As a result, timestamps accumulate in the histogram memory. A peak may be seen in the data in the histogram memory which indicates the presence of an object at a particular distance. When a peak has an acceptable signal to noise ratio, further accumulation of data in the histogram memory may add little or no useful information. The accumulation of timestamps may be stopped, and data from the histogram memory may be transferred to the image processor 106. Accumulation of timestamps using the macropixel may then re-commence. In general, data may be transferred from the macropixel periodically (i.e. after predetermined time intervals), or may be transferred after a threshold level of signal to noise ratio of a peak has been achieved.

The logic circuit 118 monitors the data held in the histogram memory to identify peaks in the data. Peaks which are identified are compared by the logic circuit 118 with a threshold time value indicative of a predetermined object distance. In an embodiment the threshold time value may correspond with an object distance of 2m. In terms of a time value this may be expressed as 1.33 x 10⁻⁸ seconds (time = speed of light / distance). If a peak with a time value of less than 1.33 x 10⁻⁸ seconds is identified then the logic circuit may instruct that operation of the macropixel is switched to the second mode of operation. Although the threshold in this example is a time value associated with 2m, other time values may be used.

Macropixels 235-238 are schematically depicted as operating in the second mode of operation. Taking as an example macropixel 235, in the second mode of operation, the signal output from each pixel 235a-p is processed separately. Thus, when a photon is incident upon a given pixel 235a, the front end 112 causes a time value to be read out from the time to digital value convertor 114 and stored in a part of the histogram memory which is specifically allocated for that pixel. Therefore, instead of a single set of data being stored in the histogram memory, nine sets of data are stored in the histogram memory. This is relatively high resolution data. The signal to noise ratio may be sufficiently high because the object reflecting the light is relatively close (e.g. within 2m).

The time to digital value convertor 114 may be capable of receiving outputs from multiple pixels simultaneously and converting these into digital values for storage in the histogram memory. In an alternative approach, multiplexing may be used such that the time to digital convertor 114 receives signals from each pixel a-p of the macropixel 235 in a series. In one example, a raster scan of the pixels a-p may be used, such that signals are received from pixel a, then pixel b, etc. Where this is done, the histogram memory may record data from all the pixels a-p together with identifiers which identify which from pixel the data was received.

Data is periodically transferred to the image processor 106. Transfer for a given pixel may occur when a peak in the data for that pixel has an acceptable signal to noise ratio (e.g. above a predetermined threshold). Alternatively, data transfer for a given pixel may occur after predetermined time intervals. Data transfer for all of the pixels 235a-p may occur at the same time, or may occur at different times for different pixels. The timing of data transfer may depend for example on the size of the histogram memory and extent to which multiplexing is being used. Data transfer should occur before the histogram memory becomes over-filled.

The logic circuit 118 monitors the data held in the histogram memory to determine whether peaks are present in the data. Peaks which are identified are compared by the logic circuit 118 with a threshold time value indicative of a predetermined object distance (e.g. 1.33 x 10⁻⁸ seconds). If a peak with a time value of less than 1.33 x 10⁻⁸ seconds is identified then the logic circuit may instruct that the macropixel continues to be operated in the second mode. On the other hand, if no peak with a time value of less than 1.33 x 10⁻⁸ seconds is identified then the logic circuit may instruct that the macropixel switch to operating in the first mode.

The image processor 106 generates a depth map which consists of a combination of individual pixel outputs and macropixel outputs. Time of flight sensing is performed with high resolution data and low resolution data being captured in parallel.

The embodiment of the invention is advantageous because it provides a relatively high signal to noise but low resolution output when a sensed object is relatively distant, but automatically switches to a higher resolution output when a closer object is present. The switching from low resolution to high resolution is performed on-the-fly. That is, it does not depend upon receiving instructions from the image processor 106 after a depth map (or other image) has been generated. Instead, switching is performed by the logic circuit 118 based upon data in the histogram memory 116 (and thus may be performed quickly). Similarly switching from high resolution to low resolution is also performed on-the-fly via instruction from the logic circuit 118, and does not depend upon receiving instructions from the image processor 106.

Embodiments of the invention provide lower resolution data for a background of an image and higher resolution data for a foreground, without requiring that two full images are obtained. As noted further above, obtaining two full images is disadvantageous because it requires the use of more energy in order to generate the illumination for those two images.

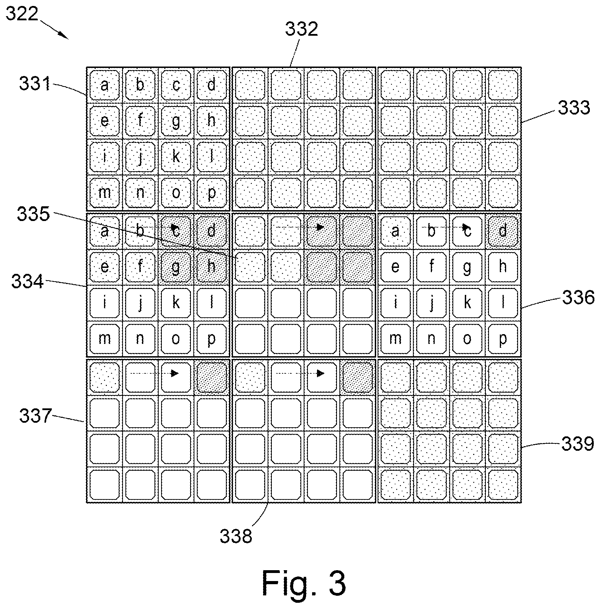

An alternative embodiment of the invention is depicted schematically in figure 3. This embodiment is similar to the embodiment depicted in figure 2, but instead of there being a single threshold which determines the mode of operation, there are now two thresholds. It will be appreciated that in other embodiments more than two thresholds may be used. The sensor 322 again comprises nine macropixels 331-339, each of which has sixteen pixels a-p (for simplicity of illustration not all of these are labelled).

Referring to figures 1 and 3 in combination, outputs from individual pixels a-p are processed separately when the logic circuit 118 determines that the distance to an object is less than 2 metres. Outputs from groups of four pixels are combined together if the logic circuit 118 determines that the object distance is between 2 metres and 5 metres. Output from a macropixel are used if the logic circuit determines that the object distance is more than 5 metres. Although the thresholds are expressed here in units of distance, they may equivalently be expressed in units of time. Other thresholds may be used.

In figure 3, four of the macropixels 331-333, 339 are operating in a first mode in which outputs from all pixels a-p of each macropixel are combined together. Three of the macropixels 336-338 are operating in a second mode in which outputs from each pixel a-p of the macro pixel are processed separately. Two of the macropixels 334, 335 are operating in a third mode in which outputs from groups of four pixels a,b,e,f; c,d,g,h; i,j,m,n; k,l,o,p are combined together. The groups of four pixels may be referred to as sub-groups. In this third mode, the histogram memory 116 has four data sets, each data set representing a different group of four pixels. In other embodiments, sub-groups of pixels may have a different number of pixels.

As with the method depicted in figure 2, the logic circuit 118 monitors the data held in the histogram memories to determine whether peaks are present in the data. Peaks which are identified are compared by the logic circuit 118 with the threshold values, and macropixels are switched between the first, second and third modes of operation based upon the results of those comparisons. As with the method depicted in figure 2, the switching is performed on-the-fly. Switching between modes does not depend upon receiving instructions from the image processor 106.

The embodiment of figure 3 is advantageous because it provides time of flight measurements with three different resolutions (and associated signal to noise levels) in parallel from the same sensor 322.

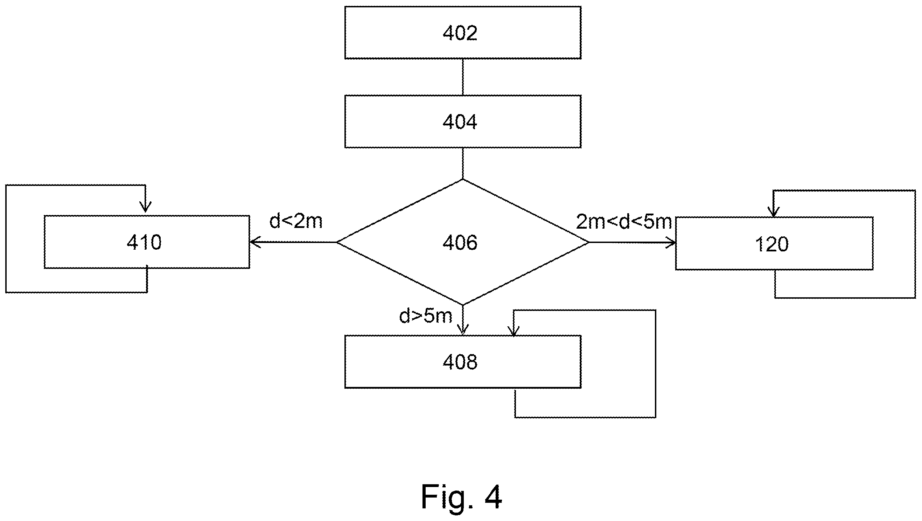

Figure 4 is a flow chart which depicts a time of flight sensing method according to an embodiment of the invention. The method may for example use the sensor array depicted in figure 3. The method starts at step 402 for a macropixel of the sensor array (e.g. when a pulse of light is emitted from the light source 102 - see figure 1). At step 404 a low resolution acquisition is made (e.g. outputs from sixteen pixels which make up the macropixel are combined together). This may be referred to as the first mode of operation. At step 406 the acquired data is checked by the logic circuit 118 (see figure 1) to see if a peak is present which indicate an object at a distance below a first threshold, or an object at a distance below a second threshold. The thresholds in this example correspond with 2 metres and 5 metres. If the data indicates no objects at a distance less than 5 metres then at step 408 a further low resolution acquisition is made. The low resolution acquisition step repeats multiple times so that more low resolution data is obtained. The data is transferred to the image processor 106 and the method is restarted.

If a peak indicative of an object at a distance of less than 2 metres is identified at step 406, then at step 410 operation of the macropixel switches such that outputs from single pixels are acquired and stored separately in the histogram memory. This may be referred to as the second mode of operation. This high resolution acquisition step repeats multiple times so that more high resolution data is obtained. The data is transferred to the image processor 106 and the method is restarted. The low resolution data that was acquired before switching to the second mode may be transferred to the image processor 106 as well as the high resolution data.

If a peak indicative of an object at a distance of between 2 and 5 metres is identified at step 406, then outputs from sub-groups of four pixels of the macropixel are combined together and stored separately in the histogram memory. This is step 412 and may be referred to as the third mode of operation. This intermediate resolution acquisition step repeats multiple times so that more intermediate resolution data is obtained. Periodically the data is transferred to the image processor 106 and the method is restarted. The low resolution data that was acquired before switching to the second mode may be transferred to the image processor 106 as well as the intermediate resolution data.

In an embodiment, once the switch to the second mode of operation or third mode of operation has occurred, the logic circuit 118 (see figure 1) may check the acquired data to monitor for a peak which corresponds with the peak seen when operating in the first mode of operation. That is, the data is checked to see whether an object at the expected distance is seen. If the object is not seen then the logic circuit may switch operation back to the first mode of operation. An advantage of this approach is that it may provide data with a sufficiently high signal to noise ratio for use by the image processor, if sufficiently strong signal to noise data is not seen in the second or third modes of operation.

In an embodiment, acquisition of data in the first mode of operation may continue even after a peak corresponding to an object less than 5m or less than 2m has been identified. The acquisition of data in the first mode of operation may continue until a desired ratio of signal to noise has been achieved. At this point operation may switch to the second or third modes. An advantage of this approach is that data with a sufficiently high signal to noise ratio will always be available for use by the image processor, even if the second or third mode does not generate useable data (i.e. data with a sufficiently high signal to noise ratio).

Modifications to the above method may be made. For example, instead of always beginning with a low resolution acquisition for each macropixel, the initial acquisition for a macropixel may be at whatever resolution was previously used for the macropixel. In one example, if a video stream is being generated then previously recorded distance data for that macropixel may be used to predict the best acquisition resolution to use for the next initial acquisition for that macropixel.

Although the described embodiments of the invention use threshold distances of 2 metres and optionally 5 metres, in other embodiments other threshold distances may be used. A method according to an embodiment of the invention may use a single threshold distance, may use two threshold distances, or may use more than two threshold distances. For example three or more threshold distances may be used.

In the described embodiments, the thresholds are mostly expressed in terms of distances. However, thresholds may be applied in terms of time instead of distances. For example the thresholds may be expressed as 1.33 x 10⁻⁸ seconds (equivalent to 2 metres) and as 3.325 x 10⁻⁸ seconds.

In the described embodiments of the invention each macropixel consists of 16 individual pixels. In other embodiments each macropixel may have a different number of individual pixels. Different groupings of those pixels may be used. For example, sub-groups of pixels consisting of more than four pixels may be used.

Embodiments of the invention allow the capture in parallel of higher resolution foreground with more spatial details together with lower resolution background at acceptable signal to noise levels.

Applications of the invention include image segmentation, for example for a video conferencing call. During a video conferencing call, images may be segmented between a foreground which is represented in higher resolution and a background which is represented in lower resolution. This may for example be done if the background is not relevant to the call and the caller wishes it to be suppressed for privacy reasons (e.g. a work related call done at home). In order to achieve this in current systems, two dimensional spatial images (as opposed to depth maps) are obtained, and image processing is used to determine which part of those 2D spatial images are foreground and which are background. This approach uses a lot of processing of power, and therefore will deplete significant energy from the battery of a mobile device. As explained elsewhere, energy depletion in a mobile device is undesirable. This intensive processing is avoided by embodiments of the invention.

By providing background measurements and foreground measurements in parallel, embodiments of the invention allow more accurate perspective and details to be provided in augmented reality systems. The same may also apply for virtual reality or mixed reality systems.

Embodiments of the invention may advantageously allow objects to be tracked more accurately. The movement of an object measured in pixels per second across a sensor will be faster for a relatively close object and slower for a relatively distant object (if the objects are travelling at the same speed). Since embodiments of the invention scale resolution according to the distance to an object, the same object travelling at the same speed can be tracked at different distances with different resolutions (giving effectively the same tracking information). Embodiments of the invention allow an object to be tracked effectively, even as the object moves through different distances from the sensor array. Embodiments of the invention advantageously provide three dimensional tracking (which is more useful than conventional two dimensional tracking). Embodiments of the invention may provide tracking over a greater range of distances (which may be referred to as depths) from the sensor array because switching between different resolutions can occur automatically.

In figure 1, the front end 112, time to digital value convertor 114, memory 116, logic circuit 118 and time to distance converter 120 are all depicted as an electrical circuit 143 which is formed in the same integrated circuit as its associated macropixel 133. The electrical circuits 141-149 may be located beneath the sensor 122. Alternatively the electrical circuits may be located around a periphery of the sensor 122. Providing the electrical circuits beneath the sensor 122 may be preferable because it may provide scalability and may provide superior performance.

It is not essential that all of the elements of the electrical circuits are in the integrated circuit. One or more of the elements may be located remotely from the integrated circuit. For example, the time to distance converter may form part of a different integrated circuit. However, providing all of the elements in the integrated circuit may be the most efficient configuration.

A logic circuit 118 is provided for each group of pixels (which may be referred to as a macropixel).

Embodiments of the present disclosure can be employed in many different applications including, for example, in mobile phones.

### List of reference numerals:

100 - Time of flight sensor system
102 - Light source
104 - Sensor module
106 - Image processor
110 - Sensor electronics
112 - Front end
114 - Time to digital value convertor
116 - Memory
118 - Logic circuit
120 - Time to distance convertor
122, 222, 322 - Sensor
131-139 - Groups of sensor pixels (macropixels)
141-149 - Electrical circuits
231-239 - Groups of sensor pixels (macropixels)
331-339 - Groups of sensor pixels (macropixels)
a-p - Pixels of a macropixel
402 - Start of method
404 - Low resolution acquisition
406 - Check of acquired data by logic circuit
408 - Further low resolution acquisition
410 - Acquisition from single pixels
412 - Acquisition from groups of four pixels

The skilled person will understand that in the preceding description and appended claims, positional terms such as 'above', 'along', 'side', etc. are made with reference to conceptual illustrations, such as those shown in the appended drawings. These terms are used for ease of reference but are not intended to be of limiting nature. These terms are therefore to be understood as referring to an object when in an orientation as shown in the accompanying drawings.

Although the disclosure has been described in terms of preferred embodiments as set forth above, it should be understood that these embodiments are illustrative only and that the claims are not limited to those embodiments. Each feature disclosed or illustrated in the present specification may be incorporated in any embodiments, whether alone or in any appropriate combination with any other feature disclosed or illustrated herein.

## Claims

1. A method of time of flight sensing, the method comprising:
using an emitter (102) to emit pulses of radiation;
using an array of photo-detectors (122) to detect radiation reflected from an object;
for a given group of photo-detectors of the array, determining based upon measured times of flight of the radiation, whether to use a first mode of operation in which outputs from individual photo-detectors of the group are combined together or to use a second mode of operation in which outputs from individual photo-detectors are processed separately; **characterized in that**
the array of photo-detectors, wherein the photo-detectors are single photon avalanche photodiodes, comprises a plurality of groups of photo-detectors, (131-139)
and wherein one or more groups of photo-detectors operate in the first mode whilst in parallel one or more groups of photo-detectors operate in the second mode,
the switching between modes of operation for a given group of photodetectors is controlled by an independently operating electrical logic circuit (118) which is associated with that group of photodetectors based upon measured times of flight of the radiation.

2. The method of claim 1, wherein when the method begins groups of photo-detectors initially operate in the first mode of operation.

3. The method of claim 2, wherein when the method begins all groups of photo-detectors initially operate in the first mode of operation.

4. The method of any of claim 1, wherein the method switches from the first mode of operation to the second mode of operation for a group of photo-detectors if measured times of flight for that group of photo-detectors indicate the presence of an object at distance which is below a threshold distance.

5. The method of claim 4, wherein the method delays switching to the second mode of operation until sufficient measured times of flight have been received at the group of pixels in the first mode to provide a desired signal to noise ratio.

6. The method of claim 4 wherein the method switches immediately to the second mode of operation.

7. The method of claim 6, wherein if measured times of flight for the individual photo-detectors do not indicate the presence of an object at the distance identified during the first mode of operation, the method switches back to the first mode of operation.

8. The method of claim 1, comprising for the given group of photo-detectors of the array, determining based upon measured times of flight of the radiation, whether to use a third mode of operation in which outputs from sub-groups of photo-detectors are combined together, the method switching from the first mode of operation to the third mode of operation for a group of photo-detectors if measured times of flight for that group of photo-detectors indicate the presence of an object at distance which is below a first threshold distance but above a second threshold distance, wherein one or more groups of photo-detectors operate in the first mode whilst in parallel one or more groups of photo-detectors operate in the third mode.

9. The method of claim 8, wherein one or more groups of photo-detectors operate in the second mode.

10. The method of claim 1, wherein the logic (118) forms part of an electrical circui (141-149) which is associated with the group of photodetectors (131-139) and which forms part of the same integrated circuit as the photodetectors.

11. The method of claim 1, wherein the method re-commences each time a pulse of light is emitted.

12. A time of flight sensor system (100) comprising an emitter (102) configured to emit pulses of radiation, and a sensor module (104) comprising a sensor (122) and sensor electronics (110);
wherein the sensor (122) comprises an array of photo-detectors, the photo-detectors are single photon avalanche photodiodes, the photo-detectors being arranged in groups(131-139),
and wherein the sensor electronics (110) comprises a plurality of independently operating electric circuits (141-149), an electric circuit being associated with each group of sensors;
and wherein each electric circuit (141-149) includes a logic circuit (118) configured to determine based upon measured times of flight of the radiation, whether to use a first mode of operation in which outputs from individual photo-detectors of the group are combined together or to use a second mode of operation in which outputs from individual photo-detectors are not combined together.

13. The system of claim 12, wherein the logic circuit is configured to the electric circuit from the first mode of operation to the second mode of operation for a group of photo-detectors if measured times of flight for that group of photo-detectors indicate the presence of an object at distance which is below a threshold distance.

14. The system of claim 12, wherein the logic circuit is configured to determine based upon measured times of flight of the radiation, whether to use a third mode of operation in which outputs from sub-groups of photo-detectors are combined, switching from the first mode of operation to the third mode of operation for a group of photo-detectors occurring if measured times of flight for that group of photo-detectors indicate the presence of an object at distance which is below a first threshold distance but above a second threshold distance.

15. The system of claim 12, wherein the electrical circuit which is associated with the group of photodetectors forms part of the same integrated circuit as the photodetectors.

16. The system of claim 12, wherein the electrical circuit which is associated with the group of photodetectors further comprises a front end, a time to digital value convertor, and a memory.

17. The system of claim 12, wherein the memory is a histogram memory.

## Patentansprüche

1. Verfahren zum Laufzeitmessen, das Verfahren Folgendes umfassend:
Verwenden eines Emitters (102), um Strahlungsimpulse zu emittieren;
Verwenden einer Matrix von Fotodetektoren (122), um Strahlung zu detektieren, welche von einem Objekt für eine gegebene Gruppe von Fotodetektoren der Matrix reflektiert wird;
Bestimmen auf Grundlage gemessener Laufzeiten der Strahlung, ob eine erste Betriebsart verwendet werden soll, in welcher Ausgaben von individuellen Fotodetektoren der Gruppe miteinander kombiniert werden, oder eine zweite Betriebsart verwendet werden soll, in welcher Ausgaben von individuellen Fotodetektoren separat verarbeitet werden; **dadurch gekennzeichnet, dass**
die Matrix von Fotodetektoren, wobei die Fotodetektoren Einzelphotonen-Lawinenfotodioden sind, eine Vielzahl von Gruppen von Fotodetektoren (131 - 139) umfasst, und wobei mindestens eine Gruppe von Fotodetektoren in der ersten Betriebsart arbeitet, während parallel mindestens eine Gruppe von Fotodetektoren in der zweiten Betriebsart arbeitet,
das Umschalten zwischen Betriebsarten für eine gegebene Gruppe von Fotodetektoren durch eine unabhängig arbeitende elektrische Logikschaltung (118) gesteuert wird, welche dieser Gruppe von Fotodetektoren auf Grundlage gemessener Laufzeiten der Strahlung zugeordnet ist.

2. Verfahren nach Anspruch 1, wobei, wenn das Verfahren beginnt, Gruppen von Fotodetektoren anfänglich in der ersten Betriebsart arbeiten.

3. Verfahren nach Anspruch 2, wobei, wenn das Verfahren beginnt, alle Gruppen von Fotodetektoren anfänglich in der ersten Betriebsart arbeiten.

4. Verfahren nach Anspruch 1, wobei das Verfahren für eine Gruppe von Fotodetektoren aus der ersten Betriebsart in die zweite Betriebsart umschaltet, wenn gemessene Laufzeiten für diese Gruppe von Fotodetektoren das Vorhandensein eines Objekts in einer Entfernung angeben, welche unter einer Schwellenentfernung liegt.

5. Verfahren nach Anspruch 4, wobei das Verfahren ein Umschalten in die zweite Betriebsart verzögert, bis ausreichend gemessene Laufzeiten an der Pixelgruppe in der ersten Betriebsart empfangen wurden, um ein gewünschtes Signal-Rausch-Verhältnis bereitzustellen.

6. Verfahren nach Anspruch 4, wobei das Verfahren sofort in die zweite Betriebsart umschaltet.

7. Verfahren nach Anspruch 6, wobei, wenn gemessene Laufzeiten für die individuellen Fotodetektoren nicht das Vorhandensein eines Objekts in der Entfernung angeben, welche während der ersten Betriebsart identifiziert wurde, das Verfahren in die erste Betriebsart zurückschaltet.

8. Verfahren nach Anspruch 1, umfassend Bestimmen, für die gegebene Gruppe von Fotodetektoren der Matrix, auf Grundlage gemessener Laufzeiten der Strahlung, ob eine dritte Betriebsart verwendet werden soll, in welcher Ausgaben von Untergruppen von Fotodetektoren miteinander kombiniert werden, wobei das Verfahren für eine Gruppe von Fotodetektoren aus der ersten Betriebsart in die dritte Betriebsart umschaltet, wenn gemessene Laufzeiten für diese Gruppe von Fotodetektoren das Vorhandensein eines Objekts in einer Entfernung angeben, welche unter einer ersten Schwellenentfernung, jedoch über einer zweiten Schwellenentfernung liegt, wobei mindestens eine Gruppe von Fotodetektoren in der ersten Betriebsart arbeitet, während parallel mindestens eine Gruppe von Fotodetektoren in der dritten Betriebsart arbeitet.

9. Verfahren nach Anspruch 8, wobei mindestens eine Gruppe von Fotodetektoren in der zweiten Betriebsart arbeitet.

10. Verfahren nach Anspruch 1, wobei die Logik (118) einen Teil einer elektrischen Schaltung (141 - 149) ausbildet, welche der Gruppe von Fotodetektoren (131 - 139) zugeordnet ist und welche einen Teil der gleichen integrierten Schaltung wie die Fotodetektoren ausbildet.

11. Verfahren nach Anspruch 1, wobei das Verfahren jedes Mal, wenn ein Lichtimpuls emittiert wird, erneut beginnt.

12. Laufzeitsensorsystem (100), umfassend einen Emitter (102), welcher eingerichtet ist, um Strahlungsimpulse zu emittieren, und ein Sensormodul (104), welches einen Sensor (122) und Sensorelektronik (110) umfasst;
wobei der Sensor (122) eine Matrix von Fotodetektoren umfasst, wobei die Fotodetektoren Einzelphotonen-Lawinenfotodioden sind, wobei die Fotodetektoren in Gruppen (131 - 139) angeordnet sind, und wobei die Sensorelektronik (110) eine Vielzahl von unabhängig arbeitenden elektrischen Schaltungen (141 - 149) umfasst, wobei jeder Gruppe von Sensoren eine elektrische Schaltung zugeordnet ist;
und wobei jede elektrische Schaltung (141 - 149) eine Logikschaltung (118) umfasst, welche eingerichtet ist, um auf Grundlage gemessener Laufzeiten der Strahlung zu bestimmen, ob eine erste Betriebsart verwendet werden soll, in welcher Ausgaben von individuellen Fotodetektoren der Gruppe miteinander kombiniert werden, oder eine zweite Betriebsart verwendet werden soll, in welcher Ausgaben von individuellen Fotodetektoren nicht miteinander kombiniert werden.

13. System nach Anspruch 12, wobei die Logikschaltung eingerichtet ist, um die elektrische Schaltung aus der ersten Betriebsart in die zweite Betriebsart umzuschalten, wenn gemessene Laufzeiten für diese Gruppe von Fotodetektoren das Vorhandensein eines Objekts in einer Entfernung angeben, welche unter einer Schwellenentfernung liegt.

14. System nach Anspruch 12, wobei die Logikschaltung eingerichtet ist, um auf Grundlage gemessener Laufzeiten der Strahlung zu bestimmen, ob eine dritte Betriebsart verwendet werden soll, in welcher Ausgaben von Untergruppen von Fotodetektoren kombiniert werden, wobei für eine Gruppe von Fotodetektoren Umschalten aus der ersten Betriebsart in die dritte Betriebsart auftritt, wenn gemessene Laufzeiten für diese Gruppe von Fotodetektoren das Vorhandensein eines Objekts in einer Entfernung angeben, welche unter einer ersten Schwellenentfernung, jedoch über einer zweiten Schwellenentfernung liegt.

15. System nach Anspruch 12, wobei die elektrische Schaltung, welche der Gruppe von Fotodetektoren zugeordnet ist, einen Teil der gleichen integrierten Schaltung wie die Fotodetektoren ausbildet.

16. System nach Anspruch 12, wobei die elektrische Schaltung, welche der Gruppe von Fotodetektoren zugeordnet ist, weiterhin ein Frontend, einen Zeit-zu-Digitalwert-Wandler und einen Speicher umfasst.

17. System nach Anspruch 12, wobei der Speicher ein Histogrammspeicher ist.

## Revendications

1. Procédé de détection de temps de vol, le procédé comprenant :
l'utilisation d'un émetteur (102) pour émettre des impulsions de rayonnement ;
l'utilisation d'un réseau de photodétecteurs (122) pour détecter le rayonnement réfléchi par un objet ;
pour un groupe donné de photodétecteurs du réseau, la détermination, sur la base des temps de vol mesurés du rayonnement, du fait qu'il faut utiliser un premier mode de fonctionnement dans lequel les sorties des photodétecteurs individuels du groupe sont combinées ou qu'il faut utiliser un deuxième mode de fonctionnement dans lequel les sorties des photodétecteurs individuels sont traitées séparément ;
**caractérisé en ce que**
le réseau de photodétecteurs, dans lequel les photodétecteurs sont des photodiodes à avalanche à photon unique, comprend une pluralité de groupes de photodétecteurs (131-139), et dans lequel un ou plusieurs groupes de photodétecteurs fonctionnent dans le premier mode tandis qu'en parallèle un ou plusieurs groupes de photodétecteurs fonctionnent dans le deuxième mode,
la commutation entre les modes de fonctionnement pour un groupe donné de photodétecteurs est contrôlée par un circuit logique électrique (118) fonctionnant indépendamment, qui est associé à ce groupe de photodétecteurs sur la base des temps de vol mesurés du rayonnement.

2. Procédé selon la revendication 1, dans lequel, quand le procédé commence, des groupes de photodétecteurs fonctionnent initialement dans le premier mode de fonctionnement.

3. Procédé selon la revendication 2, dans lequel, quand le procédé commence, tous les groupes de photodétecteurs fonctionnent initialement dans le premier mode de fonctionnement.

4. Procédé selon la revendication 1, dans lequel le procédé commute du premier mode de fonctionnement au deuxième mode de fonctionnement pour un groupe de photodétecteurs si les temps de vol mesurés pour ce groupe de photodétecteurs indiquent la présence d'un objet à une distance inférieure à une distance seuil.

5. Procédé selon la revendication 4, dans lequel le procédé retarde la commutation au deuxième mode de fonctionnement jusqu'à ce que des temps de vol mesurés suffisants aient été reçus par le groupe de pixels dans le premier mode pour fournir un rapport signal sur bruit souhaité.

6. Procédé selon la revendication 4, dans lequel le procédé commute immédiatement au deuxième mode de fonctionnement.

7. Procédé selon la revendication 6, dans lequel, si les temps de vol mesurés pour les photodétecteurs individuels n'indiquent pas la présence d'un objet à la distance identifiée durant le premier mode de fonctionnement, le procédé recommute au premier mode de fonctionnement.

8. Procédé selon la revendication 1, comprenant, pour le groupe donné de photodétecteurs du réseau, la détermination, sur la base des temps de vol mesurés du rayonnement, du fait qu'il faut utiliser ou non un troisième mode de fonctionnement dans lequel les sorties de sous-groupes de photodétecteurs sont combinées, le procédé commutant du premier mode de fonctionnement au troisième mode de fonctionnement pour un groupe de photodétecteurs si les temps de vol mesurés pour ce groupe de photodétecteurs indiquent la présence d'un objet à une distance inférieure à une première distance seuil mais supérieure à une deuxième distance seuil, dans lequel un ou plusieurs groupes de photodétecteurs fonctionnent dans le premier mode tandis qu'en parallèle un ou plusieurs groupes de photodétecteurs fonctionnent dans le troisième mode.

9. Procédé selon la revendication 8, dans lequel un ou plusieurs groupes de photodétecteurs fonctionnent dans le deuxième mode.

10. Procédé selon la revendication 1, dans lequel la partie logique (118) fait partie d'un circuit électrique (141-149) qui est associé au groupe de photodétecteurs (131-139) et fait partie du même circuit intégré que les photodétecteurs.

11. Procédé selon la revendication 1, dans lequel le procédé recommence chaque fois qu'une impulsion de lumière est émise.

12. Système de capteur de temps de vol (100) comprenant un émetteur (102) configuré pour émettre des impulsions de rayonnement, et un module de capteur (104) comprenant un capteur (122) et de l'électronique de capteur (110) ;
dans lequel le capteur (122) comprend un réseau de photodétecteurs, les photodétecteurs sont des photodiodes à avalanche à photons uniques, les photodétecteurs étant agencés en groupes (131-139), et dans lequel l'électronique de capteur (110) comprend une pluralité de circuits électriques fonctionnant indépendamment (141-149), un circuit électrique étant associé à chaque groupe de capteurs ; et
dans lequel chaque circuit électrique (141-149) inclut un circuit logique (118) configuré pour déterminer, sur la base des temps de vol mesurés du rayonnement, s'il faut utiliser un premier mode de fonctionnement dans lequel les sorties des photodétecteurs individuels du groupe sont combinées, ou s'il faut utiliser un deuxième mode de fonctionnement dans lequel les sorties des photodétecteurs individuels ne sont pas combinées.

13. Système selon la revendication 12, dans lequel le circuit logique est configuré pour commuter le circuit électrique du premier mode de fonctionnement au deuxième mode de fonctionnement pour un groupe de photodétecteurs si les temps de vol mesurés pour ce groupe de photodétecteurs indiquent la présence d'un objet à une distance inférieure à une distance seuil.

14. Système selon la revendication 12, dans lequel le circuit logique est configuré pour déterminer, sur la base des temps de vol mesurés du rayonnement, s'il faut utiliser ou non un troisième mode de fonctionnement dans lequel les sorties de sous-groupes de photodétecteurs sont combinées, la commutation du premier mode de fonctionnement au troisième mode de fonctionnement pour un groupe de photodétecteurs se produisant si les temps de vol mesurés pour ce groupe de photodétecteurs indiquent la présence d'un objet à une distance inférieure à une première distance seuil mais supérieure à une deuxième distance seuil.

15. Système selon la revendication 12, dans lequel le circuit électrique qui est associé au groupe de photodétecteurs fait partie du même circuit intégré que les photodétecteurs.

16. Système selon la revendication 12, dans lequel le circuit électrique associé au groupe de photodétecteurs comprend en outre une extrémité avant, un convertisseur de temps en valeur numérique, et une mémoire.

17. Système selon la revendication 12, dans lequel la mémoire est une mémoire d'histogramme.
